# EUROPÄISCHE PATENTSCHRIFT

(11) **EP 1 900 617 B1**
(45) Veröffentlichungstag und Bekanntmachung des Hinweises auf die Patenterteilung: **27.02.2013**
(21) Anmeldenummer: 07116627.6
(22) Anmeldetag: 18.09.2007
(51) Int. Cl.: B62D 33/06, B60P 3/34, B60P 3/36, B60R 15/00

(54) **Ausstattung für ein Fahrerhaus eines Nutzfahrzeugs**
Equipment for the driver's cabin of a commercial vehicle
Equipement pour une cabine de conducteur d'un véhicule utilitaire

(30) Priorität: 18.09.2006 DE 102006044409; 17.09.2007 DE 102007044317
(43) Veröffentlichungstag der Anmeldung: 19.03.2008
(73) Patentinhaber: Mo.T.I.S. GmbH, 50829 Köln (DE)
(72) Erfinder: Tomforde Johann, Prof., 71069 Sindelfingen (DE); Moreno Claudio, 71065 Sindelfingen (DE)
(74) Vertreter: Hannke, Christian

(56) Entgegenhaltungen:
- EP-A- 1 798 137
- DE-U1- 9 205 853
- FR-A- 2 632 580
- US-A- 2 743 955

## Beschreibung

Die Erfindung betrifft ein Fahrerhaus für ein Nutzfahrzeug, insbesondere für einen Lastkraftwagen, und im Wesentlichen eine Ausstattung des Innenraumes dieses Fahrerhauses, mit einbaubaren Mobiliar- und/oder weiteren Einrichtungsgegenständen gemäß dem Oberbegriff des Patentanspruches 1.

Herkömmlicherweise sind Fahrerhäuser für Nutzfahrzeuge bzw. Nutzfahrzeugkabinen für Personen, insbesondere Nutzfahrzeugkabinen von Lastkraftwagen, die ein Gehäuse aufweisen, welches zumeist selbsttragend oder gegebenenfalls mit einem außenseitigen Rahmen ausgebildet ist, bekannt. Die Nutzfahrzeugkabinen weisen einen Innenraum auf, der keine Zwischenwände beinhaltet. Derartige Nutzfahrzeugkabinen sind, sofern sie für längere Fahrten verwendet werden, in ihrem vorderen Bereich mit einem ersten Funktionsraumbereich als Fahrbereich mit zwei Fahrzeugsitzen und in ihrem hinteren Bereich mit einem weiteren Funktionsraumbereich als Schlafbereich derart aufgeteilt, dass zwischen den beiden Bereichen zumeist ein Vorhang oder dergleichen angeordnet werden kann, um die notwendige Verdunklung im Schlafbereich zu erhalten.

Eine derartige Ausbildung einer Nutzfahrzeugkabine lässt jedoch keine zusätzliche Anordnung von in sich steifen Bauelementen in Kombination mit Türen zu, sofern diese Türen nicht an einer der Außenwände befestigt werden sollen.

Derartige Nutzfahrzeugkabinen weisen häufig eine auf zwei provisorische Innenräume begrenzte Unterteilung auf, welche nachteilhaft eine nicht optimierte Ausnutzung des zur Verfügung stehenden Innenraumvolumens darstellen.

Häufig sind in dem hinteren Funktionsraumbereich kleine Seitenfenster, die zusätzlich verdunkelt werden müssten, um hieraus einen Schlafbereich zu schaffen, vorhanden.

In einigen wenigen Fällen weisen derartige Nutzfahrzeugkabinen eine zumeist selbst eingerichtete kleine Kochecke in der Form auf, dass diese durch ein selbst aufgestelltes Mikrowellengerät betrieben wird, wobei sich hierbei häufig das Problem der geeigneten Strom- und Spannungsversorgung aufgrund des begrenzt zur Verfügung stehenden LKW-Batteristromes ergibt.

Derartig aufgebaute Nutzfahrzeugkabinen besitzen in der Regel keine mechanischen und akustischen Trennungen zwischen den einzelnen Funktionsraumbereichen. Deshalb kann eine momentan im hinteren Funktionsraumbereich schlafende Person sich durchaus durch die im vorderen Funktionsraumbereich sich aufhaltende Person gestört fühlen. Dies trifft ebenso zu, wenn eine Person momentan die Mikrowelle benutzt und hierdurch Essensgeruch der weiteren Person, die momentan schläft oder das Fahrzeug fährt, zugeleitet wird.

Auch in der DE 92 05 853 U1 werden Einrichtungsgegenstände beschrieben, die in definierten Positionen innerhalb eines Funktionsbereiches gehalten bzw. angeordnet sind. wobei die Einrichtungsgegenstände insbesondere an der Wandung des Aufbaus für Fahrzeugkabinen angeordnet sind, wobei der Aufbau mit der Wandung der Fahrzeugkabine verbunden ist. Eine optische und/oder akustische Trennung zwischen den einzelnen Funktionsraumbereichen existiert nicht.

Bekannt sind ebenso aufklappbare Schlafbetten, die an einer Rückwand der Nutzfahrzeugkabineninnenseite befestigt sind und gegenüber der Rückwand auch aufgeklappt bzw. zugeklappt werden können. Hierfür ist die Rückwand entsprechend formstabil ausgebildet.

In EP 1 798 137 A2, die den Oberbegriff des Anspruchs 1 bildet, ist eine Anordnung von Säulen in der Fahrzeugkabine beschrieben, welche jedoch lediglich zur dreh- bzw. schwenkbaren Anordnung von Türen dienen, um einzelne Funktionsraumbereiche von anderen Funktionsraumbereichen trennen bzw. gegenüber diesen verschließen zu können. Zusätzliche Einrichtungsgegenstände, wie z.B. ein Waschtisch usw. werden insbesondere über entsprechende Elemente, wie Haken, Schraubverbindungen usw. direkt an der Wandung der Fahrzeugkabine angeordnet, so dass die Wandung und vorzugsweise die Innenwandung der Fahrzeugkabine entsprechende Bohrungen oder Halterungen aufweisen muss, welche jedoch lediglich eine einmalige Anordnung der Einrichtungsgegenstände nach einem definierten Innendesign der Fahrzeugkabine ermöglichen und zudem die Fahrzeugkabine nachhaltig schädigen können.

Auch in US 2 743 955 A sind Pfosten bzw. Säulen aufgezeigt, welche jedoch vorrangig zur Stabilisierung des Rahmenkonstrukts des gezeigten zweistöckigen Wohnmobils dienen, um somit den zweiten Stock konstruktiv starr mit dem ersten Stock zu verbinden und gleichzeitig das Gehäuse des Wohnmobils um das gesamte Rahmenkonstrukt bewegungsfrei anzuordnen bzw. an diesem Rahmenkonstrukt auszurichten. Eine weitere Aufgabe dieser Pfosten besteht zwar auch in der Fixierung von Trennwänden oder als Lagerelement für Türen, wobei jedoch eine Anordnung von gewichtigeren Einrichtungsgegenständen aus Sicherheitsgründen an diesen Pfosten nicht vorgesehen ist. Vielmehr werden diese Einrichtungsgegenstände an den Seitenwänden des Wohnmobiles angebracht, so dass beispielsweise bei einem Unfall durch die bei den Einrichtungsgegenständen entstehenden Fliehkräfte das Rahmenkonstrukt selbst nicht beschädigt wird, wodurch eine Instabilität des gesamten Gehäuses des Wohnmobils hervorgerufen werden würde.

Eine Aufhängung von Mobiliar, unabhängig von der Rückwand oder weiteren Außenwänden der Nutzfahrzeugkabine, innerhalb des Innenraums der Nutzfahrzeugkabine, ist bisher nicht vorgesehen, auch weil hierfür notwendige Wände zwischen den Außenwänden der Nutzfahrzeugkabine nicht vorhanden sind. Eine Aufhängung von Mobiliar an der Decke der Nutzfahrzeugkabine ist ebensowenig bisher angestrebt worden, da das Kabinendach zumeist für die Aufnahme von schwereren Lasten nicht ausgerichtet ist.

Derzufolge liegt der vorliegenden Erfindung die Aufgabe zugrunde, eine Nutzfahrzeugkabine für Personen, insbesondere eine Nutzfahrzeugkabine von Lastkraftwagen zur Verfügung zu steilen, die zum einen eine Aufteilung ihres Innenraumes der Fahrzeugkabine selbst in mehrere Funktionsraumbereiche durch die Anordnung von gegebenenfalls verschließbaren Trennwänden sowie Mobiliar- und/oder Einrichtungsgegenständen ermöglicht und die ein gleichzeitiges Sichaufhalten mehrerer Personen in der Nutzfahrzeugkabine ermöglicht, ohne dass sich hierdurch die Personen in ihren unterschiedlichen Tätigkeiten innerhalb der unterschiedlichen Funktionsbereiche gestört fühlen, wobei zum anderen eine flexible, schnelle und einfache Umgestaltung der Funktionsbereiche bzw. der einzelnen Mobiliar- und/oder Einrichtungsgegenständen innerhalb der Fahrzeugkabine erlaubt werden soll, ohne die Wandungen der Fahrzeugkabine bzw. die Fahrzeugkabine selbst dauerhaft beschädigenden zu müssen.

Diese Aufgabe wird gemäß den Merkmalen des Patentanspruches 1 gelöst.

Ein wesentlicher Punkt der Erfindung liegt darin, dass bei einer Ausstattung für ein Fahrerhaus eines Nutzfahrzeuges, insbesondere eines Lastkraftwagens, mit einbaubaren Mobiliar- und/oder weiteren Einrichtungsgegenständen die Mobiliar- und/oder weiteren Einrichtungsgegenstände auf eine Mehrzahl an Funktionsraumbereiche innerhalb des Fahrerhauses derart aufgeteilt sind, dass die Mobiliar- und/oder weiteren Einrichtungsgegenstände an zwischen den Funktionsraumbereichen sich vertikal erstreckenden Stangenelementen befestigt sind.

Durch eine derartige Konstruktion des Innenraums eines Fahrerhauses wird es ermöglicht, dass sämtliche Mobiliar- und/oder weiteren Einrichtungsgegenstände gegebenenfalls auch lösbar schnell und einfach an derartigen Stangenelementen befestigt werden können, wobei auch eine Übereinanderanordnung der einzelnen Gegenstände auf unkomplizierte Weise möglich ist. Dies kann vorzugsweise mittels Befestigungselemente, die seitlich an den Stangenelementen angeordnet sind, geschehen.

Die Stangenelemente ermöglichen zudem auf einfache Art und Weise eine Aufteilung des Innenraumes des Fahrerhauses bzw. der Nutzfahrzeugkabine in verschiedene Funktionsraumbereiche, die die Anordnung und Trennung verschiedener Mobiliar- und weiterer Einrichtungsgegenstände ermöglichen.

Es wird ein erster Funktionsraumbereich mit zwei Fahrzeugsitzen und mindestens ein zweiter und dritter Funktionsraumbereich mit Mobiliareinrichtung, welche in Fahrtrichtung betrachtet hinter dem ersten Funktionsraumbereich angeordnet sind, geschaffen. Bei dem ersten Funktionsraumbereich handelt es sich um den zur Vorderseite der Nutzfahrzeugkabine hingewandten Fahrerbereich, der mit zwei Fahrzeugsitzen ausgestattet ist und sich vorzugsweise über die gesamte Breite der Nutzfahrzeugkabine erstreckt. Der zweite und der dritte Funktionsraumbereich hingegen sind in Fahrzeuglängsrichtung betrachtet nebeneinan-der derart angeordnet, dass sie beide hinter dem ersten Funktionsraumbereich, also dem Fahrersitzabschnitt liegen. Hierbei teilen sich der zweite und der dritte Funktionsraumbereich entweder die gesamte Breite der Nutzfahrzeugkabine unter sich oder mit einem weiteren Funktionsraumbereich auf. Durch eine geschickte Ausnutzung des gesamten Nutzfahrzeuginnenraumes kann eine derartige Aufteilung in mehr als einen oder zwei Funktionsraumbereiche ermöglichen, dass eine bisher nicht bekannte Anzahl an verschiedene Funktionseinrichtungen, innerhalb einer Fahrzeugkabine von herkömmlichen Ausmaß, angeordnet werden können. Dies betrifft beispielsweise die innerhalb des gemeinsamen Nutzfahrzeuginnenraums mögliche Anordnung von Sanitäreinrichtungen, wie Waschtisch und Toilette, eine Dusche, eine Küche und zwei Betten, wobei der Fahrzeugsitzraum nahezu unbeeinträchtigt hiervon bleibt, wenn das Nutzfahrzeug sich im fahrenden Zustand befindet.

Eine zwischen den einzelnen Funktionsraumbereichen angeordnete Türenausbildung zum wahlweisen Verschließen einer ersten Öffnung des gegenüber dem zweiten Funktionsraumbereich abtrennbaren dritten Funktionsraumbereiches oder einer zweiten Öffnung des gegenüber dem ersten Funktionsraumbereich abtrennbaren zweiten Funktionsraumbereiches ergibt vorteilhaft, dass keine Störung sowohl akustischer als auch jeder anderen Art, wie beispielsweise einer geruchsmäßigen Störung, für mehrere sich in der Nutzfahrzeugkabine aufhaltende Personen ergibt. Sofern eine Aufteilung der Nutzfahrzeugkabine in mindestens drei mechanisch, akustisch und geruchsmäßig voneinander getrennte Funktionsraumbereiche angeordnet ist, kann durch eine derartige Anordnung der Tür aufgrund des begrenzten Innenraums innerhalb einer handelsüblichen Nutzfahrzeugkabine diese Tür - eine Trennwand bildend - eingesetzt werden, und zwar derart, dass die Tür nur diejenige Trennwand bildet, die notwendig ist, um eine Person, welche sich in dem einen Funktionsraumbereich aufhält, nicht durch eine andere Person, die sich in dem anderen Funktionsraumbereich aufhalten möchte, zu stören.

Die Stangenelemente erstrecken sich vorteilhaft von dem Fahrerhausboden bis zu der Fahrerhausdecke, so dass durchgehende Stangen, die auf einfache Weise unter- und oberseitig am Fahrzeugboden und an der Fahrzeugdecke befestigt werden können, angeordnet sind.

Die Stangenelemente sind am Fahrerhausboden und der Fahrerhausdecke mittels Befestigungselemente, wie Winkel- und Scharnierelemente, Ausnehmungen, die an den Stangenelementen stirnseitig angebrachte zapfenartige Elemente aufnehmen, oder die Stangenelemente mente stirnartig vollständig aufnehmende und am Fahrerhausboden und an der Fahrerhausdecke befestigte oder integrierte Ausnehmungen, dauerhaft oder lösbar befestigt.

Vorzugsweise sind die Stangenelemente zur Schaffung neuer Funktiansraumbereiche innerhalb des Fahrerhauses versetzbar ausgebildet. Dies kann beispielsweise dadurch geschehen, dass die Stangeelemente mit stirnseitig angeordneten zapfenähnlichen Elementen oder dergleichen in verschiedene Ausnehmungen, die am Fahrzeugboden oder an der Fahrzeugdecke, beispielsweise bereits bei der Karosserieherstellung des Fahrerhauses verteilt angeordnet sind, seitlich hineingeschoben werden können.

Idealerweise weisen derartige einschiebbare Stangenelemente zusätzlich Arretierungselemente, wie beispielsweise zum ober- und unterseitigen Abstemmen der Stangenelemente gegenüber dem Fahrerhausboden und der Fahrerhausdecke auf, wobei ebenso nicht durch Druckbeaufschlagung funktionierende Arretierungselemente, sondern auch Schraubverbindungen, die mit dem Fahrerhausboden und der Fahrerhausdecke eine lösbare oder auch dauerhafte Verbindung eingehen, auf.

Erfindungsgemäß ist an jedem Eckbereich eines Funktionsraumbereiches, in dem ein oder mehrere übereinander angeordnete Mobiliar- und/oder Einrichtungsgegenstände angeordnet sind, mindestens ein Stangenelement angeordnet, so dass beispielsweise ein Funktionsraumbereich beispielsweise von vier Stangenelementen umschlossen werden kann, wobei selbstverständlich wahlweise auch mehr oder weniger Stangenelemente für die Ausbildung eines Funktionsraumbereiches verwendet werden können. Beispielsweise ist bei einer seitlichen Anordnung der Stangenelemente gegenüber den Mobiliar- und weiteren Einrichtungsgegenständen die Anordnung von lediglich zwei Stangenelementen notwendig, um die Mobiliar- und weiteren Einrichtungsgegenstände seitlich befestigt übereinander anzuordnen.

Selbstverständlich können derartige Mobiliar- und Einrichtungsgegenstände zusätzlich oder stattdessen an Innenwänden des Fahrerhauses befestigt werden, um hierdurch eines oder mehrere Stangenelemente einzusparen, wobei die einfachste und flexibelste Lösung zur Befestigung von derartigen Mobiliar- und Einrichtungsgegenständen in der Anordnung derartiger Stangenelemente zu sehen ist.

Die Mobiliar- und Einrichtungsgegenstände umfassen beispielsweise Sanitäreinrichtungsgegenstände, wie wahlweise klappbar ausgebildete Waschtische, Toiletten und/oder Duschbauteile, Stauraumeinrichtungen, wie Hängeschränke und Regale, Küchenraumeinrichtungen, wie beispielsweise mindestens ein Kochfeld und mindestens einen Kühlschrank und Türen und/oder Betten, wobei jeweils vorteilhaft derartige Stangenelemente zur Befestigung dieser sämtlichen Einrichtungs- und Mobiliargegenstände, die selbstverständlich modulartig auch miteinander ausgewechselt werden können oder durch weitere Gegenstände ersetzt werden können, als Befestigungselemente dienen. Hierfür können die Stangenelemente vorteilhaft auch seitlich angebrachte Befestigungselemente, wie beispielsweise Scharnierelemente zum Anordnen von Schwenk- oder schiebbaren Türen aufweisen.

Zusätzlich oder alternativ weisen die Stangenelemente seitlich angebrachte weitere Befestigungselemente, die vorzugsweise höhenverschiebbar ausgebildet sind, auf, um die Mobiliar- und/oder Einrichtungsgegenstände seitlich und/oder an ihren Ecken daran gegebenenfalls übereinander zu befestigen. Dies ermöglicht eine individuelle Höheneinstellung der Mobiliar- und/oder Einrichtungsgegenstände gegenüber den Stangenelementen und somit eine individuelle Ausrichtung der einzelnen Gegenstände in den einzelnen Funktionsraumbereichen. Beispielsweise kann ein Hängeschrank über einem darunter angeordneten Kochfeld individuell hoch angeordnet werden, um so die Beabstandung zwischen dem Hängeschrank und dem darunter liegenden Kochfeld variabel einzustellen.

Die weiteren Befestigungselemente können auch Schraubverbindungen, Einhakelemente mit komplementär ausgebildeten Ösenelementen mit oder ohne Arretierungselemente zum Arretieren an den Stangenelementen in einer bestimmten Höhenlage darstellen, so dass beispielsweise bei der Verwendung von Einhakelementen Haken, die an den Eckbereichen der einzelnen Mobiliar- und/oder Einrichtungsgegenstände angeordnet sind, dazu verwendet werden können, um von oben auf einfache Weise die Mobiliar- und/oder weiteren Einrichtungsgegenstände in die an den Säulen angeordneten Ösenelemente einzuhängen. Somit ist ein schnelles Entfernen und Austauschen einzelner Gegenstände und damit auch eine Veränderung der einzelnen Funktionsraumbereiche möglich. Denn durch die Verwendung von lösbaren bzw. herausnehmbaren Stangenelementen zur Aufteilung der verschiedenen Funktionsraumbereiche kann durch Herausnehmen der einzelnen Mobiliar- und weiteren Einrichtungsgegenstände und dem anschließenden Herausnehmen der einzelnen Stangenelemente eine Veränderung der Aufteilung des Innenraums des Fahrerhauses durchgeführt werden. Dies kann sogar derart gestaltet werden, dass sämtliche weiteren Funktionsraumbereiche neben dem Fahrerraumbereich verschwinden und somit der gesamte hinter den Fahrersitzen liegende Bereich als Stauraum oder dergleichen verwendet werden kann.

Alternativ kann beispielsweise eine Versetzung der einzelnen Stangenelemente dazu führen, dass auf Sanitäreinrichtungen innerhalb der Nutzfahrzeugkabine und somit auf einen darauf gerichteten Funktionsraumbereich verzichtet wird, um dem Kochbereich und gegebenenfalls einem Schlafbereich vermehrt Platz zu schaffen.

Die Stangenelemente können einen runden, einen rechteckigen oder jeden beliebigen anderen Querschnitt aufweisen. An ihren Längsseiten kann vorteilhaft ein Führungsschienensystem ausgebildet sein, welches zum auswechselbaren Einsetzen von Türen, Trennwänden und dergleichen verwendet werden kann. Somit dienen die Stangenelemente auch zur Anordnung von Trennwänden.

Alternativ kann an den Längsseiten der Stangenelemente eine Mehrzahl von Steckverbindungen, wie beispielsweise die bereits erwähnten Haken-Ösen-Verbindungen, angeordnet sein. Dies ermöglicht das Verstellen der Türen und Trennwände auch stufenweise.

Die Stangenelemente sind an ihren Ober- und Unterseiten auch mittels angeschweißter Flansche mit den Innenseiten der Decke und des Bodens verschraubt, vernietet oder mit dergleichen Verbindungen verbunden.

Vorteilhaft sind die zwei Stangenelemente derart angeordnet, dass sie hinter den Fahrzeugsitzen die Begrenzung für eine in einer Zwischenquerwand, die sich in Fahrzeugbreitenrichtung erstreckt, angeordnete Tür darstellt. Eine dieser Stangenelemente kann als Türaufhängung und die zweite als Anschlag für die Tür dienen.

Selbstverständlich können die herausnehmbaren Stangenelemente auch mittels eines Führungsschienensystems, welches am Fahrerhausboden und an der Fahrerhausdecke der Nutzfahrzeugkabine angeordnet ist, verschoben werden, um hierdurch eine beliebig anders gestaltete Raumaufteilung mittels der mit den Stangenelementen angeordneten Trennwänden und Türen zu erhalten.

Eine beispielhafte Aufteilung eines Nutzfahrzeugkabineninnenraumes kann derart aussehen, dass der erste Funktionsraumbereich mit den Fahrzeugsitzen im vorderen Bereich der Nutzfahrzeugkabine durch Trennwände und einem Türdurchgang, der beispielsweise mittig zwischen einer links- und rechtsseitig angeordneten Trennwand angeordnet ist, von dem hinteren Bereich abgetrennt ist. Der hintere Bereich, der einen zweiten Funktionsraumbereich und gegebenenfalls einen dritten und vierten Funktionsraumbereich beinhaltet, kann beispielsweise in einem durch eine Trennwand abgetrennten Bereich eine Toilette mit einem darüber auf- und abklappbaren Waschtisch enthalten, um auf diese Weise eine Nasszelle zur Verfügung zu stellen.

Zusätzlich oder anstatt dem Nasszellenbereich kann als dritter Funktionsraumbereich eine Dusche mittig angeordnet sein, die mittels einer ausgewählten nach hinten gerichteten Au-βenrückwand der Nutzfahrzeugkabine den hierfür erforderlichen Mindestplatz zur Verfügung stellt. Ein in diesem Zusammenhang erforderlicher großer Wassertank ist in nicht genutzten Zwischenräumen zwischen Seiten-lAußen- und Innenwänden angeordnet.

Als vierten Funktionsraumbereich, der wahlweise ohne Trennwand zu dem ersten Funktionsraumbereich nach vorne offen ausgebildet ist oder mittels einer Trennwand - gegebenenfalls auf Wunsch - gegenüber dem vorderen Funktionsraumbereich abgeschlossen ist, beinhaltet eine Kochecke mit einem Herd, einem darunter oder daneben angeordneten Kühlschrank, der ein Gefrierfach enthalten kann und mittels Batterie, Strom oder Gas betrieben wird und eine Mikrowelle sowie einen kleinen Wandschrank zur Aufnahme von Geschirr und dgl.

Um die Anordnung dieser zweiten, dritten und vierten Funktionsraumbereiche im hinteren Bereich der Nutzfahrzeugkabine zu ermöglichen, wird das bisher in diesem Bereich herabklappbar angeordnete Bett im ersten Funktionsraumbereich, also oberhalb der Fahrzeugsitze, angeordnet. Ein derartiges unterhalb des Daches des Fahrzeugkabineninnenraumes auf- und abhängbares Bett wirkt in keinster Weise störend für die diese Kabine benutzenden Personen und kann durch eine Rückenlehnenverstellung der Fahrzeugsitze oder durch ein Verschieben derjenigen nach unten geklappt werden, um in eine Schlafposition gebracht zu werden.

Es kann sogar bei einer derartigen Auftellung des Nutzfahrzeugkabineninnenraumes, der ausdrücklich für sämtliche herkömmliche Nutzfahrzeugkabinengrößen gedacht ist und realisiert worden ist, ein weiteres aufklappbares Bett angeordnet werden, welches sich in Längsrichtung der Nutzfahrzeugkabine und des LKWs in aufgeklapptem Zustand erstreckt, wobei es im eingeklappten Zustand als Rückwand im Bereich des vierten Funktionsraumbereiches angeordnet ist. Das aufklappbare Bett kann im eingeklappten Zustand entweder an die Rückwand der Nutzfahrzeugkabine angelegt sein, um hierdurch eine zweckmäßige und platzsparende Aufbewahrung des Bettes zu ermöglichen. Alternativ kann das eingeklappte Bett, welches hochkant gestellt ist, sich also in die Vertikale erstreckt, dazu verwendet werden, eine Trennwand zwischen dem ersten Funktionsraumbereich mit den Fahrzeugsitzen und dem in diesem Abschnitt dahinterliegenden vierten Funktionsraumbereich, der beispielsweise als Kochbereich ausgebildet sein kann und ansonsten zum nach vorne hin angeordneten Fahrzeugsitzbereich offen ausgestaltet ist, dienen.

Durch eine tiefere Anordnung des zweiten ausklappbaren Bettes gegenüber dem ersten abgehängten Bett wird es ermöglicht, dass zwei Personen gleichzeitig schlafen können, wobei das aufklappbare Bett ebenso im Bereich des vierten Funktionsraumbereiches mittels einer Tür gegenüber dem im hinteren mittleren Bereich mittig angeordneten dritten Funktionsraumbereich abgetrennt werden kann. Dies ermöglicht, dass jede ein Bett benutzende Person, unabhängig davon, ob sie das erste oder das zweite Bett benutzt, über die erste oder eine weitere Tür Zugang zu dem dritten und zweiten Funktionsraumbereich hat und hinter sich die Tür schließen kann, sobald sie diese Funktionsraumbereiche betreten hat. Hierdurch wird es ermöglich, dass die Toilette oder der Waschtisch benutzt werden kann, während die andere Person sich noch schlafend in dem Bett, unabhängig davon, ob es sich hierbei um das erste oder das zweite Bett handelt, befindet.

Dieser letztgenannte wesentliche Vorteil der vorliegenden Erfindung ermöglicht somit eine geräuscharme und weitestgehend geruchsfreie Benutzung einer Toilette oder des Duschraumes, die beide gegenüber dem ersten und vierten Funktionsraumbereich mittels einer oder bevorzugt zwei Türen abgeschlossen ist, während die weitere Person sich im schlafenden Zustand in einem der Betten oder sogar im sitzenden Zustand in einer der Fahrzeugsitze befindet. Insbesondere während der Nacht ist somit ein Benutzen der Sanitärräume durch eine der Personen möglich, ohne dass die weitere Person hiervon gestört wird.

Sofern sich die gesamte Nutzfahrzeugkabine über eine Länge von beispielsweise ca. 180 - 300 cm, vorzugsweise 207 cm und eine Breite von ca. 200 - 280 cm, vorzugsweise 230 cm in ihrer Grundfläche erstreckt, weist der erste Funktionsraumbereich in Fahrzeuglängsrichtung eine Länge von 100 - 170 cm, vorzugsweise 130 cm und die gleiche Breite wie die Breite der Nutzfahrzeugkabine auf. Die hinteren Funktionsraumbereiche, welche nebeneinander angeordnet sind, also der zweite, dritte und gegebenenfalls vierte Funktionsraumbereich weisen in Fahrzeuglängsrichtung betrachtet eine Länge von 50 - 120 cm, vorzugsweise 70 cm auf.

Wenn der zweite, der dritte und der vierte Funktionsraumbereich in nahezu rechteckiger Form im hinteren Bereich der Nutzfahrzeugkabine nebeneinander angeordnet sind, kann der zweite Funktionsraumbereich eine Breite von 50 - 100 cm, vorzugsweise 70 cm, der dritte Funktionsraumbereich eine Breite von 60 - 100 cm, vorzugsweise 80 cm, und der vierte Funktionsraumbereich eine Breite von ebenso 60 - 100 cm, vorzugsweise 80 cm aufweisen.

Sämtliche Funktionsraumbereiche sind mit der für Nutzfahrzeugkabinen üblichen Höhe von beispielsweise 190 - 230 cm, vorzugsweise von 210 cm ausgestattet.

Es eignen sich bereits Kabinen mit einer Grundfläche von ca. 1,5 x 2,5 m für eine derartige vorteilhafte Aufteilung in vier verschiedene Funktionsraumbereiche zur Schaffung eines multifunktionalen Funktions- und Innenraumkonzeptes einer Nutzfahrzeugkabine. Dies entspricht handelsüblichen bisherigen Nutzfahrzeugkabinen.

In den Zeichnungen ist die Nutzfahrzeugkabine im Ganzen oder in einem Ausschnitt mit jeweils vier Funktionsraumbereiche dargestellt. Es zeigen:
- Fig. 1: in einer schematischen Darstellung eine perspektivische räumliche Darstellung einer Nutzfahrzeugkabine mit insgesamt vier Funktionsraumbereichen;
- Fig. 2: in einer schematischen Darstellung ein Ausschnitt einer Nutzfahrzeugkabine in perspektivischer räumlicher Darstellung von hinten mit insgesamt vier Funktionsraumbereichen
- Fig. 3: eine Draufsicht einer Nutzfahrzeugkabine mit insgesamt vier Funktionsraumbereichen;
- Fig. 4: in einer perspektivischen, räumlichen Darstellung einen Ausschnitt einer Nutzfahrzeugkabine mit insgesamt vier Funktionsraumbereichen gemäß einer weiteren Ausführungsform der Erfindung;
- Fig. 5: Die in Fig. 4 wiedergegebene Ausführungsform der Nutzfahrzeugkabine mit heruntergeklappiem Waschtisch;
- Fig. 6: einen Ausschnitt der Nutzfahrzeugkabine gemäß der weiteren Ausführungsform nach den Figuren 4 und 5;
- Fig. 7: ein erster Funktionsraumbereich der Nutzfahrzeugkabine gemäß der weiteren Ausführungsform der Erfindung in perspektivischer, räumlicher Darstellung;
- Fig. 8: den in Fig. 7 dargestellten ersten Funktionsraumbereich mit verschwenktem Sitz, und
- Fig. 9: in einer perspektivischen Darstellung die Nutzfahrzeugkabine gemäß der weiteren Ausführungsformen der Erfindung mit abgehängtem ersten und aufgeklapptem zweiten Bett.

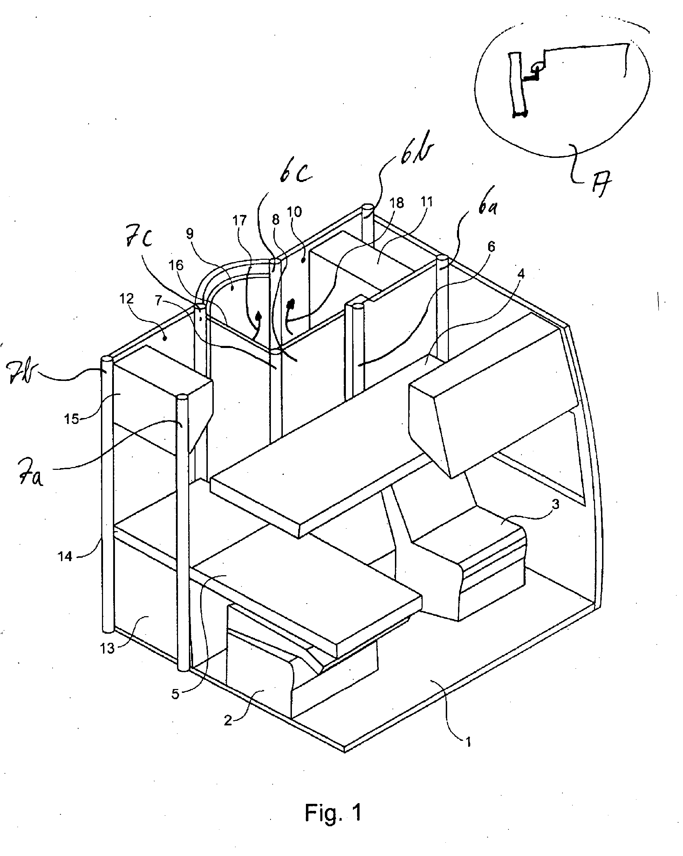

In Fig. 1 sind in einer perspektivischen, räumlichen Darstellung ein Innenraum einer Nutzfahrzeugkabine mit insgesamt vier Funktionsraumbereichen dargestellt. In einem ersten Funktionsraumbereich 1 sind zwei Fahrzeugsitze 2, 3 und ein hier nicht näher dargestelltes Armaturenbrett sowie ein Lenkrad angeordnet.

Ein abnehmbares Bett 4 und ein aufklappbares Bett 5 befinden sich in Benutzungsposition und sind in ungenutzter Position nach oben unter die Decke gefahren bzw. nach oben eine Trennwand bildend, zugeklappt.

Im Innenraum der Nutzfahrzeugkabine sind von jeder Außenwand beabstandet ein Stangenelement 6 und ein Stangenelement 7 vertikal sich erstreckend angeordnet und bilden zusammen mit einer hier nicht näher dargestellten Decke und einem Boden der Nutzfahrzeugkabine einen Rahmen für eine erste Tür 8, die ein Abtrennan eines zweiten Funktionsraumbereiches 9 gegenüber dem ersten Funktionsraumbereich 1 ermöglicht.

Ein dritter Funktionsraumbereich 10 ist in seinen Eckbereichen mit den Stangenelementen 6, 6a, 6b und 6c ausgestattet und weist Sanitäreinrichtungen mit einem Hängeschrank 11 und ein vierter Funktionsraumbereich 12 weist eine Kücheneinrichtung mit einem Küchenschrank 13, einem Kochfeld 14 und einem Hängeschrank 15 auf.

Die Stangenelemente 6, 6a, 6b und 6c weisen vorteilhaft Aufhängungselemente, wie beispielsweise seitlich angebrachte Haken und Ösen, wie es in einer Detailansicht A ausschnittsweise dargestellt ist, auf, um die einzelnen Einrichtungen bzw. insbesondere den Hängeschrank 11 von oben in die Stangenelemente einzuhängen.

Der vierte Funktionsraumbereich ist gegenüber dem zweiten Funktionsraumbereich 9 mittels einer zweiten Tür 16, die sich vorzugsweise in Richtung des Pfeils nach hinten öffnen lässt, abgetrennt. Der Pfeil 18 gibt die Öffnungsrichtung der ersten Tür 8 an.

Der vierte Funktionsraumbereich wird durch die Stangenelemente 7, 7a, 7b und 7c begrenzt und ist wiederum mit an den Stangenelementen seitlich angebrachten Befestigungselementen, wie beispielsweise in dem Ausschnitt A dargestellt, ausgestattet. Hierdurch wird ermöglicht, dass auf einfache und schnelle Weise beispielsweise der Hängeschrank 15 höhenverschiebbar, sofern die Haken innerhalb eines Führungssystems, welches in den Stangenelementen angeordnet ist, verschoben werden kann, angeordnet werden kann und auf einfache Art und Weise ersetzt werden kann. Ebenso kann der Kühlschrank 13 und gegebenenfalls das Kochfeld 14 höhenverschiebbar ausgebildet sein, indem es mittels der Befestigungselemente, die in den Stangenelementen 7b und 7a höhenverschiebbar angeordnet sind, verschoben wird.

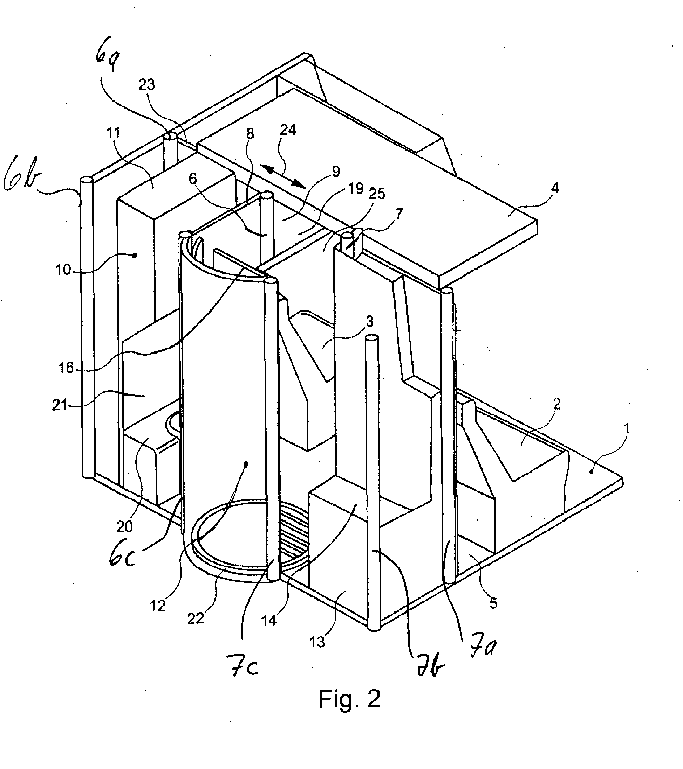

Wie der Fig. 2 entnehmbar ist, betrifft die darin aufgeführte perspektivische, räumliche Ausschnittsdarstellung die Nutzfahrzeugkabine gemäß Fig. 1, wie sie von hinten mit insgesamt vier Funktionsraumbereichen dargestellt ist. In dieser Darstellung ist die erste Tür 8 zum Freigeben einer Türöffnung 19, welche sich zwischen dem ersten Funktionsraumbereich 1 und dem zweiten Funktionsraumbereich 9 befindet, geöffnet und um 90° geschwenkt. In dieser Stellung befindet sich die erste Tür 8 automatisch in einer Schließstellung zum Verschließen des dritten Funktionsraumbereiches 10 gegenüber dem zweiten Funktionsraumbereich 9 und hat somit eine doppelte Schließfunktion. Dies ermöglicht die Benutzung einer im dritten Funktionsraumbereich 10 angeordneten Toilette 20 und eines Waschtisches 21 bei geschlossener Tür 8, während von einer weiteren Person die Kücheneinrichtung im vierten Funktionsraumbereich 12 oder eine im zweiten Funktionsraumbereich angeordnete Dusche mit einer kreisförmigen Rundfläche 22 benutzt werden kann.

Das Stangenelement 6 dient somit als Aufhängungsvorrichtung für die erste Tür 8 zum Verschließen von zwei Türöffnungen zwischen jeweils zwei Funktionsraumbereichen mittels einer Schwenktürbewegung.

Zudem ist das Stangenelement 6 ebenso wie das Stangenelement 7 als formstabile, von der Decke bis zum Boden durchgehende Säule dafür ausgelegt, dass Trennwände, wie beispielsweise eine Trennwand 23, welche zwischen dem dritten Funktionsraumbereich 10 und dem ersten Funktionsraumbereich 1 angeordnet ist, haltbar und formstabil eingesetzt werden können.

Die Stangenelemente 6a - d und 7a - c sowie 6 und 7 können in ihrer Aufhängung an der Decke und am Boden der Nutzfahrzeugkabine derart ausgestaltet sein, dass sie zur variablen Einsetzung von unterschiedlich breiten Trennwänden 23 verschoben werden können, wie es durch den Pfeil 24 angedeutet ist. Das Stangenelement 7 ermöglicht nicht nur die Anbringung eines kleinen Abschnittes 25 einer Trennwand, sondern auch das Arretieren des zugeklappten Bettes 5, welches in dieser Position ebenso eine Trennwand zwischen dem vierten Funktionsraumbereich und dem ersten Funktionsraumbereich darstellt. Zudem kann das Stangenelement 7 im Zusammenspiel mit der, im Bezug auf das aufklappbare Bett 5 gegenüberliegende, hier nicht dargestellten Seitenwand eine Vorrichtung beinhalten, um das Bett 5 im aufgeklappten Zustand stufenlos oder stufenweise in seiner Höhe zu verstellen.

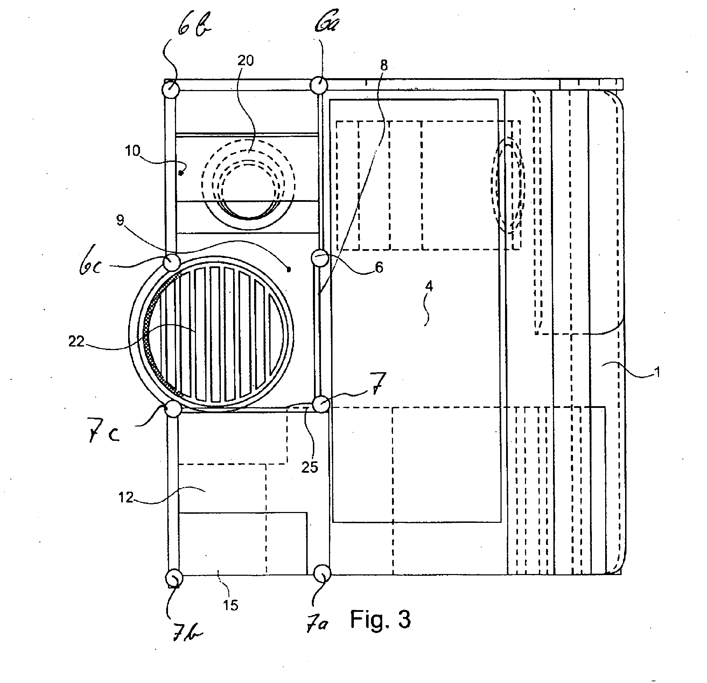

Eine Draufsicht der Nutzfahrzeugkabine ist in schematischer Weise in Fig. 3 mit insgesamt vier Funktionsraumbereichen dargestellt. In dieser Darstellung sind die Stangenelemente 6, 6a - c unter anderem zur Aufhängung der Tür wiedergegeben. In diesem Zusammenhang kann der Trennwandabschnitt 25 derart formstabil ausgebildet sein, dass er ebenso als Säule wirkend eine Tragefunktion übernimmt.

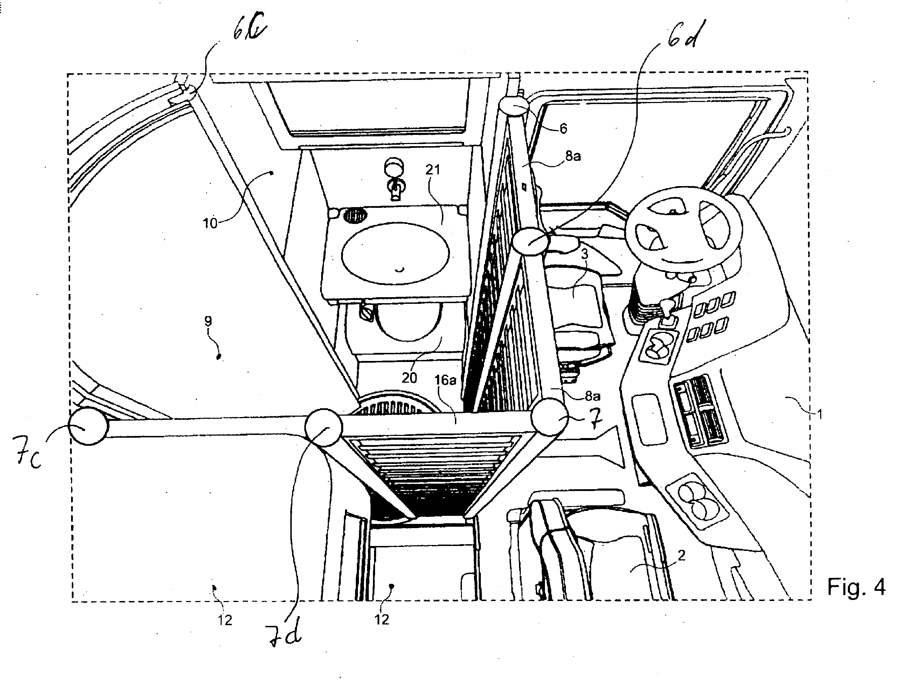

In Fig. 4 ist in einer perspektivischen Darstellung ein Ausschnitt einer Nutzfahrzeugkabine gemäß einer weiteren Ausführungsform der Erfindung gezeigt. Gleichbedeutende Bauteile sind mit gleichen Bezugszeichen in dieser und den nachfolgenden Figuren ebenso wie in Figuren 1 - 3 bezeichnet.

Die in Figuren 4 - 9 wiedergebende Ausführungsform der Nutzfahrzeugkabine unterscheidet sich von der in Figuren 1 - 3 wiedergegebene Nutzfahrzeugkabinenausführungsform darin, dass weitere Stangenelemente 6d und 7d angeordnet sind. Ebenso ist das aufklappbare Bett nicht als Trennwand ausgebildet, welches zwischen dem ersten vorderen Funktionsraumbereich und dem vierten dahinterliegenden Funktionsraumbereich liegen würde. Vielmehr ist das aufklappbare Bett im eingeklappten Zustand an eine Innenseite der Rückwand der Nutzfahrzeugkabine angelehnt, um hier eine platzsparende und nicht störende Aufbewahrung des Bettes zu erreichen.

Die Stangenelemente 6d und 7d dienen zusammen mit den Stangenelementen 6 und 7 zum Öffnen einer 3-teilig ausgebildeten Klapptür.

Zwischen dem ersten die Fahrzeugsitze enthaltenden vorderen Funktionsraumbereich und dem vierten Funktionsraumbereich, der eine Kochnische und gegebenenfalls einen Kühlschrank und Aufbewahrungsschränke für das Kochmaterial enthält, ist in diesem Fall keine Rückwand angeordnet. Selbstverständlich kann alternativ eine zusätzliche Rückwand hier angeordnet werden, wie es beispielsweise mittels einer Schiebebewegung oder einer Klappbewegung oder einer aufziehbaren Rückwand geschehen kann. Dies ist hier nicht näher dargestellt.

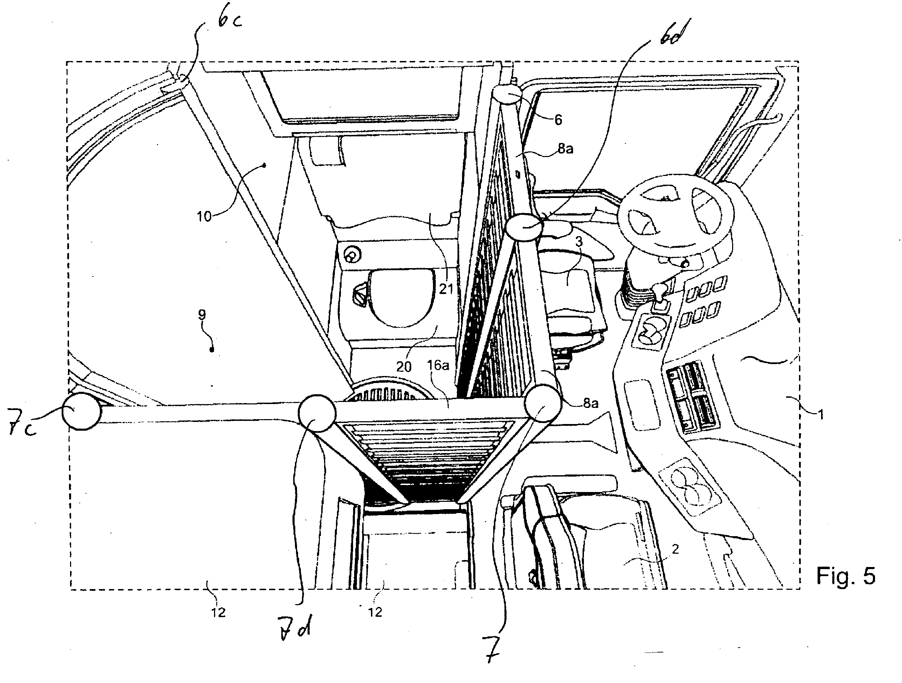

Die in Fig. 5 wiedergegebenen Darstellungen der Nutzfahrzeugkabinen gemäß der zweiten Ausführungsform unterscheiden sich von der in Fig. 4 wiedergegebenen Darstellung darin, dass der Waschtisch 21 sich im hochgeklappten Zustand befindet, um die darunterliegende Toilette zur Benutzung freizugeben.

Die Tür 16a unterscheidet sich von der in den Figuren 1 - 3 wiedergegebenen Tür 16 darin, dass sie zusammen mit der Tür 8 dreiteilig ausgebildet ist.

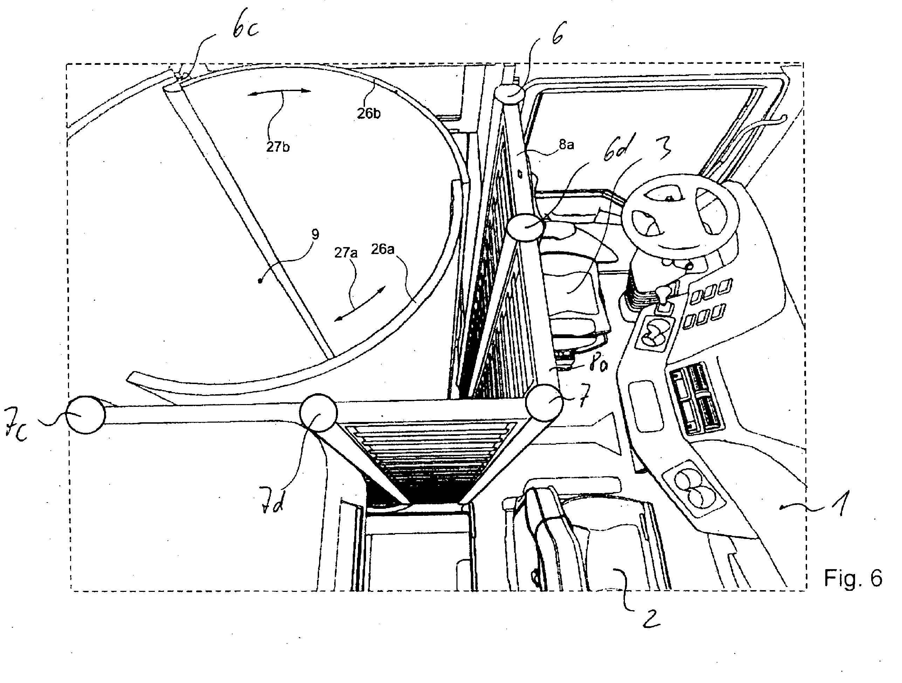

In Fig. 6 ist in einer perspektivischen Darstellung ein Ausschnitt der Nutzfahrzeugkabine gemäß der zweiten Ausführungsform der Erfindung gezeigt. Hierbei wird im zweiten Funktionsraumbereich 9 eine Duschwandtür 26a und 26b als zweiteilige Tür dargestellt, die entlang der Pfeile 27b und 27a verschoben werden können, um eine Öffnung oder Schließung der Duschkabine zu erreichen.

Die Tür 8a ist im Gegensatz zu der in den Figuren 1 - 3 gezeigten Tür 8 zweiteilig aufgebaut, d. h. sie weist eine Schwenkachse vorzugsweise - in Breitenrichtungen gesehen - in ihrer Mitte auf, um die sich beide Flügel dieser Tür 8a schwenken lassen, um eine platzsparende Öffnung der Tür zu erreichen.

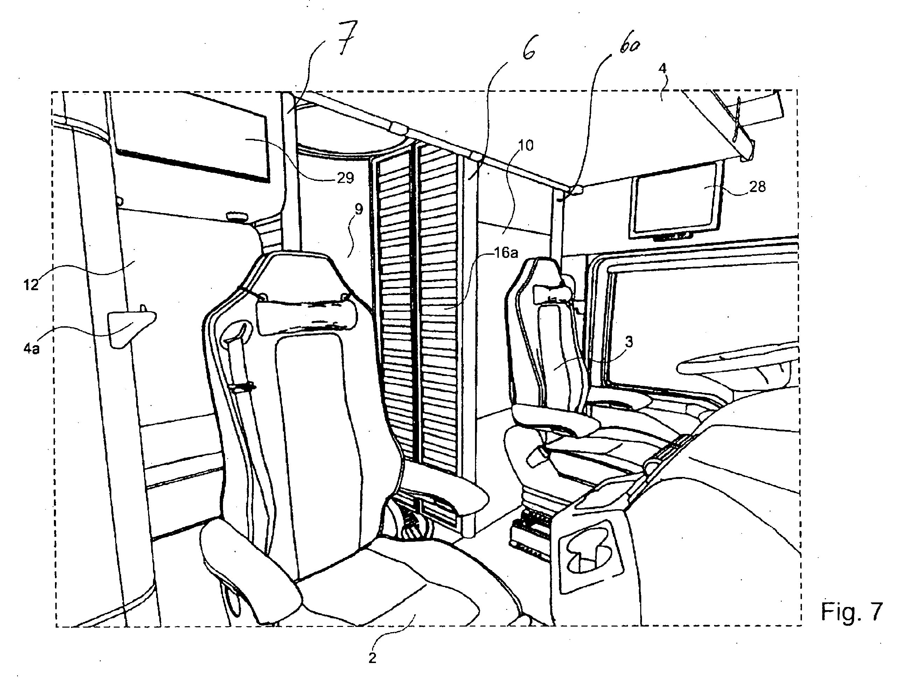

In Fig. 7 ist in einer perspektivischen Darstellung der erste Funktionsraumbereich, welcher die Fahrzeugsitze enthält, mit dem dahinterliegenden zweiten, dritten und vierten Funktionsraumbereichen dargestellt. Dieser Darstellung ist deutlich zu entnehmen, dass der zweite Funktionsraumbereich 9, der dritte Funktionsraumbereich 10 und der vierte Funktionsraumbereich 12 allesamt hinter dem Funktionsraumbereich angeordnet sind, ohne dass hierdurch eine Einsparung des Raumbedarfes in dem ersten Funktionsraumbereich notwendig ist.

Zusätzliche Bauteilelemente, wie ein Fernseher 28, der als Flachbildschirm ausgebildet sein kann, und eine Mikrowelle 29, die im vierten Funktionsraumbereich 12 hinter dem Beifahrersitz im oberen Bereich unterhalb der Decke angeordnet ist, können angeordnet sein.

Ein Hubbett 4 ist unterhalb der Decke aufgehängt und kann bei Bedarf abgehängt werden ohne dass hierfür ein Verstellen der Fahrzeugsitze 2, 3 erforderlich ist. Im abgehängten Zustand ist das Hubbett 4 an der Fahrzeugkabinenwand an fest angeordneten Haken 4a angebracht bzw. auf diesen aufgelegt.

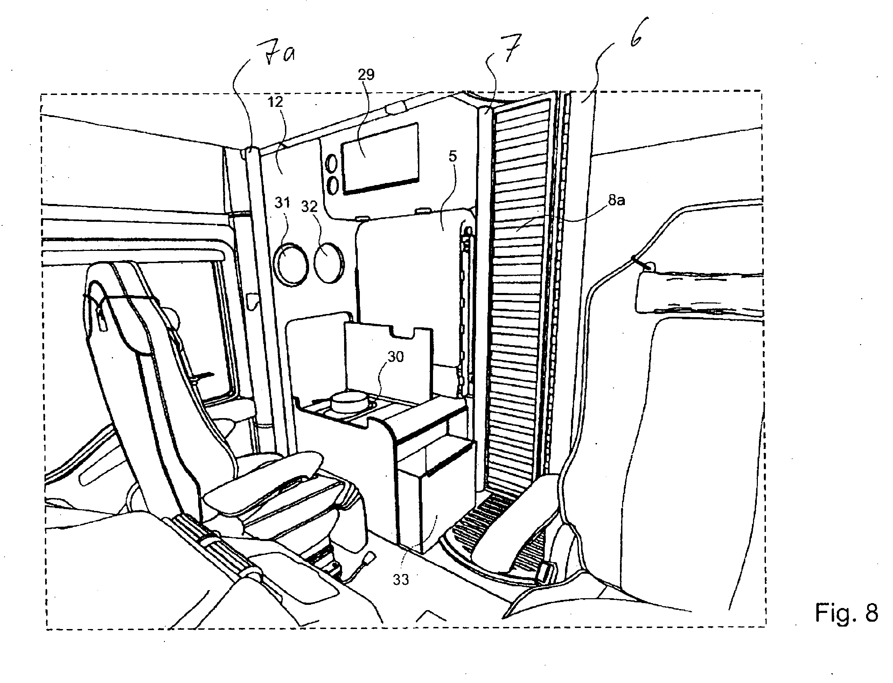

In Fig. 8 wird in einer perspektivischen Darstellung die in Fig. 7 wiedergegebene Ansicht mit der Ausnahme gezeigt, dass der Beifahrersitz um 180° geschwenkt ist, um in dem vierten Funktionsraumbereich einen Kochvorgang durchzuführen.

Hierfür weist der vierte Funktionsraumbereich 12 einen auf ungefähr Tischhöhe angeordneten Kochherd 30 und die Mikrowelle 29 sowie das Kochgeschirr 34, 32, welches wandseitig in Ausnehmungen ausgelassen werden kann, auf. Unterhalb des Kochherdes 30 kann ein Kühlschrank 33, welcher ausziehbar ist, angeordnet sein.

Sehr gut ist dieser Darstellung gemäß 18 zu entnehmen, dass das aufklappbare Bett 5 im eingeklappten Zustand an der Rückseite des vierten Funktionsraumbereiches angeordnet ist.

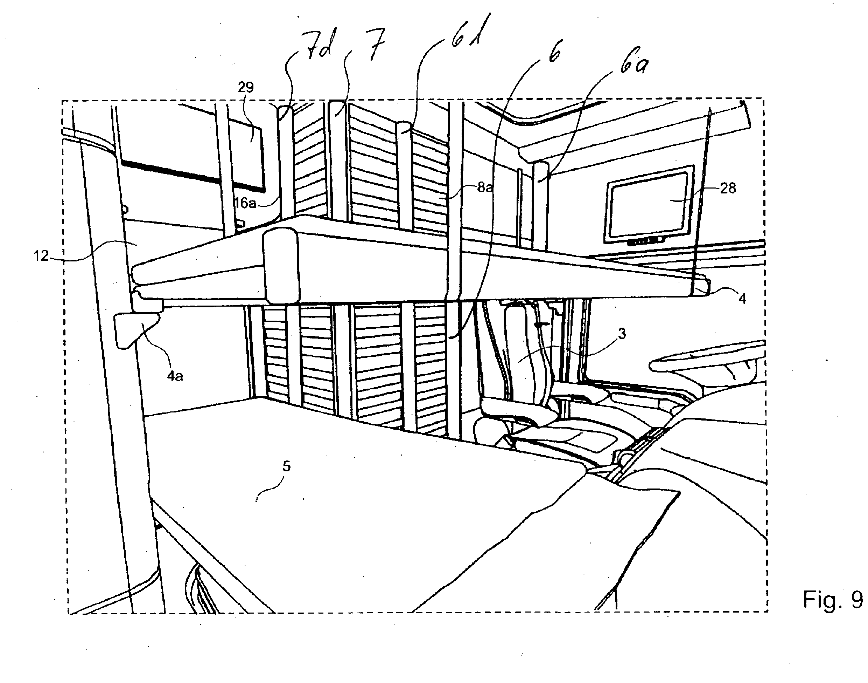

In Fig. 9 ist die Nutzfahrzeugkabine gemäß der weiteren Ausführungsform der Erfindung nochmals mit abgehängtem Hubbett 4 und aufgeklappten Bett 5 dargestellt. Ebenso sind die beiden Türen 8a und 16a im geschlossenen Zustand dargestellt.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: erster Funktionsraumbereich
- 2, 3: Fahrzeugsitze
- 4: Hubbett
- 5: aufklappbares Bett
- 6, 6a, 6b, 6c, 6d: erste Säulen
- 7, 7a, 7b, 7c, 6d: zweite Säulen
- 8, 8a: erste Tür
- 9: zweiter Funktionsraumbereich
- 10: dritter Funktionsraumbereich
- 11: Hängeschrank
- 12: vierter Funktionsraumbereich
- 13: Kühlschrank
- 14: Kochplatte
- 15: Hängeschrank
- 16, 16a: zweite Tür
- 17, 18: Öffnungspfeile
- 19: Türöffnung
- 20: Toilette
- 21: Waschtisch
- 22: kreisförmige Bodenfläche der Dusche
- 23: Trennwand
- 24: Verschieberichtung
- 25: Trennwandabschnitt
- 26a, 26b: Duschwände
- 27a, 27b: Verschieberichtungen
- 28: TV
- 29: Mikrowelle
- 30: Kochherd
- 31, 32: Kochtöpfe
- 33: Kühlschrank

## Patentansprüche

1. Fahrerhaus eines Nutzfahrzeugs, insbesondere eines Lastkraftwagens mit einbaubaren Mobiliar- und/oder weiteren Einrichtungsgegenständen, wobei die Mobiliar- und/oder Einrichtungsgegenstände auf eine Mehrzahl an Funktionsraumbereichen (1, 9, 10, 12) innerhalb des Fahrerhauses derart aufgeteilt sind, dass die Mobiliar- und/oder weitere Einrichtungsgegenstände (11, 13, 14, 15, 20, 21, 30, 33) an zwischen den Funktionsraumbereichen (1, 9, 10, 12) sich vertikal erstreckende Stangenelemente (6, 6a, 6b, 6c, 6d, 7, 7a, 7b, 7c, 7d) befestigt sind,
**dadurch gekennzeichnet dass**
an jedem Eckbereich eines Funktionsraumbereiches (1, 9, 10, 12), in dem ein oder mehrere übereinander angeordnete Einrichtungsgegenstände (11, 13, 14, 15, 24, 21, 30, 33) angeordnet sind, jeweils mindestens ein Stangenelement (6, 6a, 6b, 6c, 6d, 7, 7a, 7b, 7c, 7d) angeordnet ist.

2. Fahrerhaus nach Anspruch 1,
**dadurch gekennzeichnet, dass**
sich die Stangenelemente (6, 6a, 6b, 6c, 6d, 7, 7a, 7b, 7c, 7d) von einem Fahrerhausboden bis zu einer Fahrerhausdecke erstrecken.

3. Fahrerhaus nach Anspruch 2,
**dadurch gekennzeichnet, dass**
die Stangenelemente (6, 6a, 6b, 6c, 6d, 7, 7a, 7b, 7c, 7d) am Fahrerhausboden und der Fahrerhausdecke mittels Befestigungselemente, wie Winkel- und Scharnierelemente, Ausnehmungen, die an den Stangenelementen (6, 6a, 6b, 6c, 7, 7a, 7b, 7c) stirnseitig angebrachte zapfenartige Elemente aufweisen, oder die Stangenelemente (6, 6a, 6b, 6c, 7, 7a, 7b, 7c) stirnseitig vollständig aufnehmende und am Fahrerhausboden oder an der Fahrerhausdecke befestigte oder integrierte Ausnehmungen, dauerhaft oder lösbar befestigt sind.

4. Fahrerhaus nach einem der vorangegangenen Ansprüche,
**dadurch gekennzeichnet, dass**
die Stangenelemente (6, 6a, 6b, 6c, 6d, 7, 7a, 7b, 7c, 7d) zur Schaffung neuer Funktionsraumbereiche innerhalb des Fahrerhauses versetzbar sind.

5. Fahrerhaus nach einem der vorangegangenen Ansprüche,
**dadurch gekennzeichnet, dass**
die Mobiliar- und Einrichtungsgegenstände Sanitäreinrichtungsgegenstände, wie ein wahlweise klappbar ausgebildeter Waschtisch (21), Toilette (20) und Duschbauteile (26a, 26b), Stauraumeinrichtungen, wie Hängeschränke (15) und Regale, Kücheneinrichtungsgegenstände wie mindestens ein Kochfeld (14) und mindestens ein Kühlschrank (13), mindestens eine Tür (8, 8a) und/oder mindestens ein Bett (5) umfassend.

6. Fahrerhaus nach einem der vorangegangenen Ansprüche,
**dadurch gekennzeichnet, dass**
der erste Funktionsraumbereich einen Fahrerbereich (2, 3), ein zweiter Funktionsraumbereich einen Duschbereich (26a, 26b), ein dritter Funktionsraumbereich einen Sanitärbereich und ein vierter Funktionsraumbereich einen Kochbereich (14) darstellt.

7. Fahrerhaus nach einem der vorangegangenen Ansprüche,
**dadurch gekennzeichnet, dass**
die Stangenelemente (6, 6a, 6b, 6c, 6d, 7, 7a, 7b, 7c, 7d) seitlich angebrachte Befestigungselemente, insbesondere Scharnierelemente zum Anordnen von schwenk- oder schiebbaren Türen aufweisen.

8. Fahrerhaus nach einem der vorangegangenen Ansprüche,
**dadurch gekennzeichnet, dass**
die Stangenelemente (6, 6a, 6b, 6c, 6d, 7, 7a, 7b, 7c, 7d) seitlich angebrachte weitere Befestigungselemente, die vorzugsweise höhenverschiebbar ausgebildet sind, aufweisen, um die Mobiliar- und/oder Einrichtungsgegenstände seitlich und/oder an ihren Ecken davon, gegebenenfalls übereinander, zu befestigen.

9. Fahrerhaus nach Anspruch 8,
**dadurch gekennzeichnet, dass**
die weiteren Befestigungselemente Schraubverbindungen, Einhakelemente und komplementär ausgebildete Ösenelemente mit oder ohne Arretierungselemente zum Arretieren gegenüber den Stangenelementen (6, 6a, 6b, 6c, 6d, 7, 7a, 7b, 7c, 7d) in einer bestimmten Höhenlage darstellen.

10. Fahrerhaus nach einem der Ansprüche 6 - 9.
**dadurch gekennzeichnet, dass**
der zweite, dritte und vierte Funktionsraumbereich (9, 10, 12) hinter dem ersten Funktionsraumbereich (1) In Fahrervorwärtsrichtung betrachtet, und nebeneinander angeordnet sind.

11. Fahrerhaus nach einem der vorangegangenen Ansprüche,
**dadurch gekennzeichnet, dass**
zwischen jeweils vier Stangenelementen (6, 6a, 6b, 6c, 7, 7a, 7b, 7c) ein Funktionsraumbereich (1, 9, 10, 12) angeordnet ist.

## Claims

1. Driver's cab of a utility vehicle, in particular a heavy goods vehicle, with furnishings and/or other fixtures which can be built in, which furnishings and/or fixtures are divided into a plurality of functional areas (1, 9, 10, 12) inside the driver's cab in such a way that the furnishings and/or other fixtures (11, 13, 14, 15, 20, 21, 30, 33) are secured to bar elements (6, 6a, 6b, 6c, 6d, 7, 7a, 7b, 7c, 7d) extending vertically between the functional areas (1, 9, 10, 12),
**characterised in that**
at least one bar element (6, 6a, 6b, 6c, 6d, 7, 7a, b, 7c, 7d) is disposed respectively in every corner region of a functional area (1, 9, 10, 12) in which one or more fixtures (11, 13, 14, 15, 20, 21, 30, 33) are disposed one above the other.

2. Driver's cab as claimed in claim 1,
**characterised in that**
the bar elements (6, 6a, 6b, 6c, 6d, 7, 7a, 7b, 7c, 7d) extend from a driver's cab floor to a driver's cab roof.

3. Driver's cab as claimed in claim 2,
**characterised in that**
the bar elements (6, 6a, 6b, 6c, 6d, 7, 7a, 7b, 7c, 7d) are permanently or detachably secured to the driver's cab floor and driver's cab roof by means of fixing elements, such as angle and hinge elements, recesses incorporating pin-type elements mounted on the bar elements (6, 6a, 6b, 6c, 6d, 7, 7a, 7b, 7c, 7d) at the ends, or the bar elements (6, 6a, 6b, 6c, 6d, 7, 7a, 7b, 7c, 7d) are fully fitted at the ends in recesses affixed to or integrated in the driver's cab floor or in ends in recesses affixed to or integrated in the driver's cab floor or in the driver's cab roof.

4. Driver's cab as claimed in one of the preceding claims,
**characterised in that**
the bar elements (6, 6a, 6b, 6c, 6d, 7, 7a, 7b, 7c, 7d) can be moved inside the driver's cab in order to create new functional areas.

5. Driver's cab as claimed in one of the preceding claims,
**characterised in that**
the furnishings and fixtures comprise bathroom fittings such as a vanity unit (21) which may optionally fold out, toilet (20) and shower components (26a, 26b), storage units such as wardrobes (15) and shelves, kitchen units such as at least a hob (14) and at least one refrigerator (13), at least one door (8, 8a) and/or at least one bed (5).

6. Driver's cab as claimed in one of the preceding claims,
**characterised in that**
the first functional area constitutes a driver's area (2, 3), a second functional area constitutes a shower area (26a, 26b), a third functional area constitutes a bathroom area and a fourth functional area constitutes a cooking area (14).

7. Driver's cab as claimed in one of the preceding claims,
**characterised in that**
the bar elements (6, 6a, 6b, 6c, 6d, 7, 7a, 7b, 7c, 7d) have laterally mounted fixing elements, in particular hinge elements, for fitting pivotable or sliding doors.

8. Driver's cab as claimed in one of the preceding claims,
**characterised in that**
the bar elements (6, 6a, 6b, 6c, 6d, 7, 7a, 7b, 7c, 7d) have laterally mounted further fixing elements, which are preferably adjustable in height, in order to secure the furnishings and fixtures laterally and/or at their corners, optionally one on top of the other.

9. Driver's cab as claimed in claim 8,
**characterised in that**
the other fixing elements are screw connections, hook elements and eye elements of a complementary design with or without locking elements to provide a lock function with respect to the bar elements (6, 6a, 6b, 6c, 6d, 7, 7a, 7b, 7c, 7d) at a specific height.

10. Driver's cab as claimed in one of claims 6 - 9,
**characterised in that**
the second, third and fourth functional areas (9, 10, 12) are disposed adjacent to one another behind the first functional area (1) as viewed in the forward driving direction.

11. Driver's cab as claimed in one of the preceding claims,
**characterised in that**
a functional area (1, 9, 10, 12) is disposed respectively between four bar elements (6, 6a, 6b, 6c, 6d, 7, 7a, 7b, 7c, 7d).

## Revendications

1. Cabine de conduite d'un véhicule utilitaire, en particulier d'un poids lourd, avec des objets de mobilier et/ou d'autres objets d'équipement pouvant être incorporés, dans laquelle les objets de mobilier et/ou d'équipement sont répartis dans une pluralité de zones fonctionnelles (1, 9, 10, 12) à l'intérieur de la cabine de conduite de telle sorte que les objets de mobilier et/ou autres objets d'équipement (11, 13, 14, 15, 20, 21, 30, 33) sont fixés sur des éléments de tiges (6, 6a, 6b, 6c, 6d, 7, 7a, 7b, 7c, 7d) s'étendant verticalement entre les zones fonctionnelles (1, 9, 10, 12),
**caractérisée en ce que** respectivement au moins un élément de tige (6, 6a, 6b, 6c, 6d, 7, 7a, 7b, 7c, 7d) est agencé dans chaque espace d'angle d'une zone fonctionnelle (1, 9, 10, 12) dans laquelle un ou plusieurs objets d'équipement (11, 13, 14, 15, 20, 21, 30, 33) sont agencés les uns au-dessus des autres.

2. Cabine de conduite selon la revendication 1,
**caractérisée en ce que** les éléments de tiges (6, 6a, 6b, 6c, 6d, 7, 7a, 7b, 7c, 7d) s'étendent depuis un plancher de la cabine de conduite jusqu'à un plafond de la cabine de conduite.

3. Cabine de conduite selon la revendication 2,
**caractérisée en ce que** les éléments de tiges (6, 6a, 6b, 6c, 6d, 7, 7a, 7b, 7c, 7d) sont fixés de façon permanente ou amovible au plancher de la cabine de conduite et au plafond de la cabine de conduite au moyen d'éléments de fixation tels que des éléments de cornières et de charnières, des évidements qui présentent des éléments de type tenon posés du côté frontal sur les éléments de tiges (6, 6a, 6b, 6c, 7, 7a, 7b, 7c), ou des évidements recevant entièrement les éléments de tiges (6, 6a, 6b, 6c, 7, 7a, 7b, 7c) du côté frontal et fixés ou intégrés au plancher de la cabine de conduite ou au plafond de la cabine de conduite.

4. Cabine de conduite selon l'une des revendications précédentes,
**caractérisée en ce que** les éléments de tiges (6, 6a, 6b, 6c, 6d, 7, 7a, 7b, 7c, 7d) peuvent être déplacés à l'intérieur de la cabine de conduite afin de créer de nouvelles zones fonctionnelles.

5. Cabine de conduite selon l'une des revendications précédentes,
**caractérisée en ce que** les objets de mobilier et d'équipement comprennent des objets d'équipement sanitaire, comme un lavabo (21) réalisé au choix de manière rabattable, des toilettes (20) et des éléments de douche (26a, 26b), des équipements de rangement, comme des armoires suspendues (15) et des étagères, des objets d'équipement de cuisine, comme au moins un plan de cuisson (14) et au moins un réfrigérateur (13), au moins une porte (8, 8a) et/ou au moins un lit (5).

6. Cabine de conduite selon l'une des revendications précédentes,
**caractérisée en ce que** la première zone fonctionnelle constitue une zone de conduite (2, 3), une deuxième zone fonctionnelle constitue un espace de douche (26a, 26b), une troisième zone fonctionnelle constitue un espace sanitaire et une quatrième zone fonctionnelle constitue un espace de cuisine (14).

7. Cabine de conduite selon l'une des revendications précédentes,
**caractérisée en ce que** les éléments de tiges (6, 6a, 6b, 6c, 6d, 7, 7a, 7b, 7c, 7d) présentent des éléments de fixation posés latéralement, en particulier des éléments de charnières, en vue du montage de portes basculantes ou coulissantes.

8. Cabine de conduite selon l'une des revendications précédentes,
**caractérisée en ce que** les éléments de tiges (6, 6a, 6b, 6c, 6d, 7, 7a, 7b, 7c, 7d) présentent des éléments de fixation supplémentaires posés latéralement, qui sont de préférence réalisés de façon à pouvoir être déplacés sur la hauteur, afin de fixer les objets de mobilier et/ou d'équipement latéralement et/ou sur leurs angles, le cas échéant, les uns au-dessus des autres.

9. Cabine de conduite selon la revendication 8,
**caractérisée en ce que** les éléments de fixation supplémentaires sont des vissages, des éléments d'accrochage et des éléments d'oeillets réalisés de façon complémentaire avec ou sans éléments d'arrêt en vue de former une butée vis-à-vis des éléments de tiges (6, 6a, 6b, 6c, 6d, 7, 7a, 7b, 7c, 7d) à une position en hauteur déterminée.

10. Cabine de conduite selon l'une des revendications 6 à 9,
**caractérisée en ce que** les deuxième, troisième et quatrième zones fonctionnelles (9, 10, 12) sont agencées derrière la première zone fonctionnelle (1) vu dans le sens de la conduite, et les uns à côté des autres.

11. Cabine de conduite selon l'une des revendications précédentes,
**caractérisée en ce qu'**une zone fonctionnelle (1, 9, 10, 12) est agencée entre respectivement quatre éléments de tiges (6, 6a, 6b, 6c, 7, 7a, 7b, 7c).
